Europäisches Patentamt

European Patent Office

Office européen des brevets

(19)

(11) Veröffentlichungsnummer : **0 202 428**
**B1**

(12) **EUROPÄISCHE PATENTSCHRIFT**

(45) Veröffentlichungstag der Patentschrift :
07.06.89

(21) Anmeldenummer : 86103940.2

(22) Anmeldetag : 22.03.86

(51) Int. Cl.⁴ : **C 10 J   3/54**

(54) Verfahren zum Vergasen eines kohlenstoffhaltigen Brennstoffs, insbesondere Kohle.

(30) Priorität : 21.05.85 DE 3518260
09.01.86 DE 3600432

(43) Veröffentlichungstag der Anmeldung :
26.11.86 Patentblatt 86/48

(45) Bekanntmachung des Hinweises auf die Patenterteilung : 07.06.89 Patentblatt 89/23

(84) Benannte Vertragsstaaten :
AT BE CH DE FR GB IT LI LU NL SE

(56) Entgegenhaltungen :
WO–A–82 /033 80
DE–A–  3 228 532
DE–C–   569 211

(73) Patentinhaber : MAN  Gutehoffnungshütte  Aktiengesellschaft
Bahnhofstrasse, 66 Postfach 11 02 40
D-4200 Oberhausen 11 (DE)

(72) Erfinder : Knop, Klaus, Dr.-Ing.
Eckesdyck 11
D-4170 Geldern 1 (DE)
Erfinder : Wolters, Günter
Kaiserswerther Strasse 284
D-4000 Düsseldorf 30 (DE)
Erfinder : Kubiak, Helmut, Dr.-Ing.
Zur Emschermulde 20
D-4690 Herne 2 (DE)

(74) Vertreter : Glawe, Delfs, Moll & Partner Patentanwälte
Postfach 26 01 62 Liebherrstrasse 20
D-8000 München 26 (DE)

## Beschreibung

Die Erfindung betrifft ein Verfahren zum Vergasen eines kohlenstoffhaltigen Brennstoffs, insbesondere Kohle, von der im Oberbegriff des Anspruchs 1 angegebenen Art.

Bei der Kohlevergasung unterscheidet man autotherme und allotherme Verfahren. Bei der autothermen Vergasung wird die zur Aufrechterhaltung der Gasbildungsreaktionen erforderliche Wärme durch im Reaktor selbst ablaufende Verbrennungsreaktionen erzeugt. Dem Reaktor wird nicht nur Kohle und Dampf, sondern auch Luft bzw. Sauerstoff so zugeführt, daß eine partielle bzw. unterstöchiometrische Verbrennung der Kohle unter Bildung von Synthesegas erfolgt. In der Praxis hat dies zur Folge, daß ein erheblicher Teil, typischerweise ca. 30-40 % der Kohle für die Wärmeerzeugung verlorengehen und nur der Rest in nutzbares Gas überführt wird. Ein weiterer Nachteil liegt darin, daß das erzeugte Nutzgas durch Verbrennungsprodukte und, falls nicht mit reinem Sauerstoff gearbeitet wird, durch einen großen Anteil an Stickstoff als Ballast befrachtet ist, was seinen Nutzwert vermindert und eine entsprechend größere Dimensionierung der nachgeschalteten Reinigungs- und Entschwefelungseinrichtungen erfordert. Schließlich ist auch die durch die Verbrennungsreaktion erzeugte relativ hohe Temperatur im Reaktor nachteilig, weil dadurch die Aufrechterhaltung des Wirbelbettes erschwert und möglicherweise auch die Bildung von umweltschädlichen NOx begünstigt wird. Bekannt sind auch autotherme Kohlevergasungsverfahren, bei denen ein Teil des erzeugten Gases als Kreislaufgas in den Reaktor zurückgeführt wird und erneut an der Reaktion teilnimmt (z. B. DE-PS 32 23 702).

Bei der allothermen, d. h. fremdbeheizten Vergasung wird in den Reaktor außer dem Kohlenstaub im wesentlichen nur Dampf als Reaktionsmedium und zur Aufrechterhaltung des Wirbelbettes eingeführt, während die zur Vergasung erforderliche Reaktionswärme im wesentlichen durch Wärmeaustausch des Reaktors mit einem von außen zugeführten heißen Wärmeaustauschmedium zugeführt wird. Bei diesem Verfahren kann die Kohle im wesentlichen vollständig in Nutzgas überführt werden, und dieses ist weitgehend frei von Verbrennungsrückständen, Stickstoffballast usw. Auch läßt sich die Temperatur im Reaktor auf einen niedrigeren bzw. für die Gasbildungsreaktion optimalen Wert steuern. Es ergibt sich allerdings das Problem, daß für die Aufheizung des dem Reaktor zuzuführenden Wärmeaustauschmediums eine zusätzliche Wärmequelle und damit ein entsprechender Primärenergiebedarf erforderlich sind. Das allotherme Verfahren ist dann besonders vorteilhaft, wenn als solche zusätzliche Wärmequelle ein Kernreaktor zur Verfügung steht. In diesem Fall kann ein von primären Helium-Kühlkreislauf des Reaktors erwärmter sekundärer Heliumkreislauf sowohl als Wärmeaustauschmedium für das Aufheizen des Reaktors sowie auch zur Erzeugung des im Reaktor benötigten Dampfes dienen (vgl. van Heek und Kirchhoff in « HdT-Vortragsveröffentlichungen » 453, 1982, S. 59).

Aus WO-A-8 203 380, DE-C-569 211 und DE-A-3 228 532 sind jeweils Verfahren zur allothermen Vergasung von Kohle bekannt, bei denen zur indirekten Beheizung des Vergasungsreaktors Rauchgas verwendet wird, das durch Verbrennung eines Teils des Produktgases gewonnen wird. Aus US-A-4 212 652 ist ein Verfahren und eine Einrichtung von der im Oberbegriff des Anspruchs 1 bzw. 17 angegebenen Art bekannt, wobei das durch Verbrennung von Produktgas gewonnene Rauchgas, nachdem es den Vergasungsreaktor indirekt beheizt hat, auf eine Gasturbine geleitet wird. Diese dient zum Antrieb eines Luftverdichters, der die Verbrennungsluft zum Verbrennen der Teilmenge des Produktgases für die Rauchgaserzeugung komprimiert. Das bei diesen bekannten Verfahren nach außen abgegebene Nutzprodukt ist das Produktgas.

Der Erfindung liegt die Aufgabe zugrunde, auf der Grundlage eines Verfahrens der angegebenen Art ein umweltfreundliches Stromerzeugungssystem mit hohem Wirkungsgrad zu schaffen.

Diese Aufgabe wird erfindungsgemäß durch das im Anspruch 1 angegebene Verfahren bzw. die im Anspruch 17 angegebene Einrichtung zu seiner Durchführung gelöst.

Bei der erfindungsgemäßen Verfahrensführung ist das Hauptprodukt des Gesamtverfahrens nicht Nutzgas, sondern elektrische Energie, und die Anlage stellt insgesamt ein Kraftwerk dar. Üblicherweise wird in kohlebeheizten Kraftwerken die Kohle verbrannt und aus ihr direkt das zum Antreiben von Gasturbinen oder zur Dampferzeugung verwendete Rauchgas gewonnen. Demgegenüber scheint das erfindungsgemäße Verfahren, bei dem die Kohle zuerst vergast und das Gas dann verbrannt wird, auf den ersten Blick einen unnötigen höheren Aufwand mit sich zu bringen. Das erfindungsgemäße Verfahren hat jedoch auch gegenüber der direkten Kohleverbrennung wesentliche Vorteile. Da das durch Vergasung erzeugte Synthesegas schon vor der anschließenden Verbrennung gereinigt und entschwefelt wird, brauchen die dann enstehenden Rauchgase nicht mehr gereinigt zu werden. Da die Volumenmenge des Synthesegases wesentlich geringer ist als die der Rauchgase, ist der für die Entstaubung und Entschwefelung erforderliche Aufwand entsprechend geringer. Während bei der direkten Kohleverbrennung Rauchgas mit hohem NOx-Anteil entsteht, wird bei der Kohlevergasung wegen der wesentlich niedrigeren Temperaturen im Vergasungsreaktor die Stickoxidbildung weitgehend unterdrückt, und auch die anschließende Verbrennung des Synthesegases kann so gesteuert werden, daß die Stickoxidbildung wesentlich geringer ist als bei der Kohleverbrennung. Das erfindungsgemäße Verfahren zeichnet sich deshalb durch besondere Umweltfreundlichkeit aus. Ein nach einem solchen Verfahren betriebenes Kraftwerk kann deshalb auch ganz oder teilweise mit stark schadstoffhaltigen Brennstoffen betrieben werden. Insbesondere kann fester Haus- oder Industriemüll, Altöl od. dgl., ggf. unter entsprechender Beimischung von Kohle, dem Reaktor zugeführt werden. Die darin enthaltenen Schadstoffe verbleiben großenteils in der aus dem Reaktor abgezogenen festen Schlacke. Soweit sie in das erzeugte Gas übergehen, werden sie bei der Gasreinigung schon vor der Verbrennung abgetrennt, so daß eine Rauchgasvereinigung nicht mehr erforderlich ist. Ein entsprechendes Kraftwerk kann deshalb auch in oder nahe bei Wohngebieten errichtet werden, was im Hinblick auf den Kraft-Wärmeverbund vorteilhaft ist.

Ausführungsformen der Erfindung werden im folgenden anhand der Zeichnungen näher erläuter. Es zeigt :

Fig. 1 ein Fließschema des erfindungsgemäßen Verfahrens mit Nutzung des Synthesegases zur Energieerzeugung ;

Fig. 2 ein ähnliches Fließschema einer abgeänderten Ausführungsform ;

Fig. 3 ein Fließschema einer abgeänderten Ausführungsform des Verfahrens mit mehreren in Kaskade geschalteten Vergasungsreaktoren.

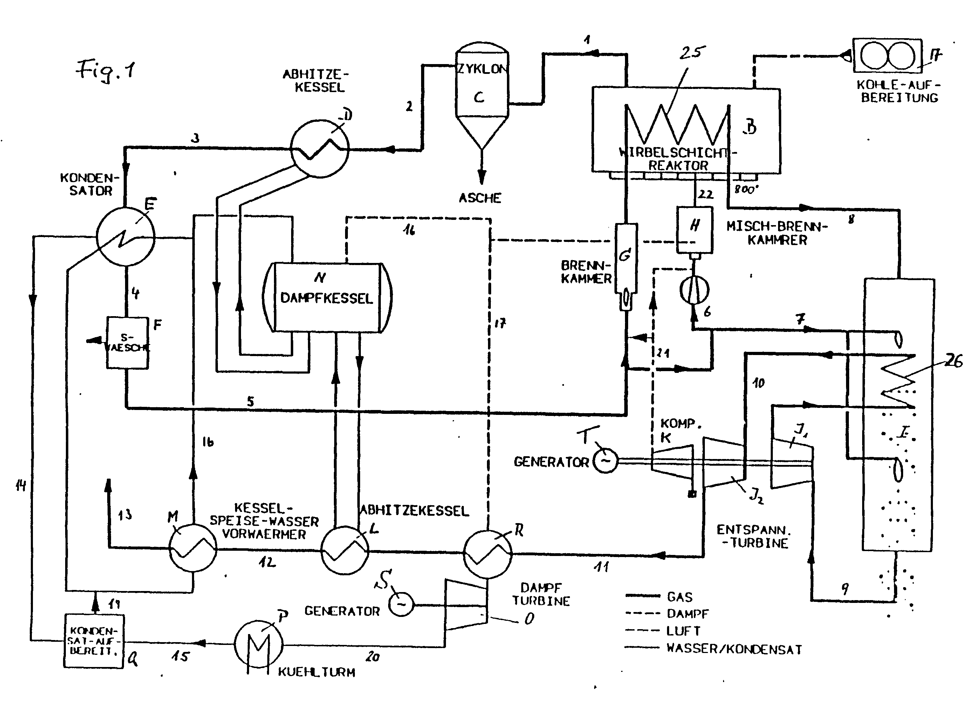

Das in Fig. 1 dargestellte Ausführungsbeispiel arbeitet wie folgt :

In einer Kohlenmühle A aufgemahlene Kohle gelangt über ein geeignetes Schleusensystem (unter Verwendung von Treibgas) in einen Wirbelschichtreaktor B. Die Vergasung der Kohle im Reaktor erfolgt allotherm mittels eines Dampf/Rauchgasgemisches (überwiegend Dampf), das in der Brennkammer H erzeugt wird, und über Leitung 22 in den Reaktor B gelangt. Die nötige Reaktionswärme wird zugeführt durch indirekten Wärmeaustausch mit Rauchgas, welches eine bei 25 angedeutete Heizschlange des Reaktors B durchströmt.

Das den Reaktor B über Leitung 1 verlassende Synthesegas wird in einem Zyklon C und entsprechenden Filtereinrichtungen von Staub befreit. Über Leitung 2 tritt das Gas (800-900 °C) in einen Abhitzekessel D ein und verläßt über diesen über 3, um in einem Kondensator E so weit abgekühlt zu werden, daß es über 4 in eine geeignete Schwefelwäsche F eintreten kann. Das die Schwefelwäsche F verlassende entschwefelte Gas gelangt über 5 in eine Brennkammer G, wo es soweit überstöchiometrisch verbrannt wird, daß das entstehende Rauchgas eine Temperatur von etwa 900 °C aufweist. Dieses Rauchgas tritt in den Wärmetauscher 25 des Reaktors B ein.

Dem Rauchgas wird im Reaktor B soviel Wärme entzogen, wie für die Vergasungsreaktion noch notwendig ist (ein Teil des Wärmeeinbringens erfolgt auch über das Dampf-Rauchgasgemisch von H). Das den Reaktor mit z. B. 750-800 °C über 8 verlassende Rauchgas tritt in einen weiteren Wärmetauscherraum I ein, wo es zur Zwischenüberhitzung des aus der ersten Stufe I₁ über Leitung 10 in die zweite Stufe I₂ der Entspannungsturbine eintretenden Rauchgases dient. Das über 9 den Wärmetauscherraum I verlassende Rauchgas tritt mit einem Druck von z. B. 40 bar in die erste Stufe I₁ der Entspannungsturbine ein. Das die zweite Stufe I₂ über 11 mit einem Enddruck von z. B. 1,2 bar und einer Temperatur von z. B. 250 °C verlassende Rauchgas wird zuerst einem Wärmetauscher R zur Überhitzung des Dampfes zugeführt und dann in einen Abhitzekessel L abgekühlt und über 12 einem Kesselspeisewasservorwärmer M und dann dem Kamin über Leitung 13 zugeführt.

Der in den Abhitzekesseln L und D erzeugte und in R überhitzte Dampf (Dampftrommel N) wird über die Dampfturbine O entspannt, die einen Generator S antreibt. Die Kondensationswärme des entspannten Dampfes wird am Wärmetauscher P abgeführt. Das Kondensat wird über 20 einem Kühlturm P und über 15 einer Kondensataufbereitung Q zugeführt, ebenso wie das Kondensat aus E über Leitung 14. Das aufbereitete Kondensat wird über 19 dem Prozeß wieder zugeführt. Zur Dampferzeugung dient das vom Vorwärmer M über Leitung 16 zugeführte Speisewasser.

Ein Teil des die Dampftrommel N verlassenden Dampfes wird über 17 der Brennkammer H zugeführt, wo der Dampf durch mit heißem Rauchgas, das aus der Verbrennung eines Teils des Synthesegases stammt, das aus Leitung 5 kommt, der Brennkammer über 6 zugeführt wird und mit Brennluft aus Kompressor K verbrannt wird, direkt vermischt und dadurch überhitzt wird.

Die Verbrennung in H erfolgt vorzugsweise stöchiometrisch, kann jedoch auch überstöchiometrisch durchgeführt werden. Bei überstöchiometrischer Betriebsweise dient der freie Sauerstoff dem zusätzlichen Wärmeeinbringen durch Verbrennung von C bzw. CO im Reaktor B. Ebenso kann Luftsauerstoff über die Kohlezuführungsleitung (Luft als Treibgas) in den Reaktor B eingebracht werden.

Die Menge an freiem Sauerstoff, der dem Reaktor B mit der Luft zugeführt werden soll, muß in jedem Fall optimiert werden (z. B. : je größer die Menge an Sauerstoff ist, die über Luft in den Prozeß eingebracht wird, umso größer ist die Menge an N₂ im Synthesegas und umso größer müssen die Aggregate C, D, E und F ausgelegt werden, andererseits kann jedoch aber der Wärmetauscher in B kleiner ausgelegt werden).

In diesen Fällen findet somit ein gewisser Anteil an autothermer Wärmeerzeugung im Reaktor B statt, wodurch auch die Zusammensetzung des Gases beeinflußt werden kann. Dieser Anteil ist jedoch auf jeden Fall so gering, daß das Verfahren seinen insgesamt allothermen Charakter nicht einbüßt.

Ein weiterer Teil des Synthesegases aus Leitung 5 kann über 7 dem Wärmetauscherraum I zugeführt werden, wo est verbrannt wird und zusätzlich heißes Rauchgas erzeugt, das mit dem Rauchgas aus 8 gemischt wird, so daß die Temperatur des der Gasturbine I₁, zugeführten Rauchgases wieder auf z. B. 900 °C-1 000 °C angehoben werden kann. Noch höhere Temperaturen sind im allgemeinen wegen der thermischen Belastung der Turbinenschaufeln unzweckmäßig.

Die vom Rauchgas beaufschlagten Entspannungsturbinen $J_1$ und $J_2$ treiben einen Generator T zur Stromerzeugung an. Ferner kann von den Turbinen ein Kompressor K angetrieben werden, der die den Brennkammern G und H über die Leitung 21 zugeführte Verbrennungsluft z. B. auf 40 bar komprimiert, wobei sich die Luft gleichzeitig auf eine Temperatur von z. B. über 600 °C erwärmt.

Das in der Brennkammer G erzeugte Rauchgas tritt mit dem Reaktor B nur in indirekten Wärmeaustausch. Es ist vorteilhaft, die Verbrennung in der Brennkammer G stark überstöchiometrisch durchzuführen, wodurch einerseits die Volumenmenge des Gases erhöht und dadurch die Energieabgabe an die Entspannungsturbine $J_1$, $J_2$ vergrößert wird, und andererseits das Gas nach Verlassen des Wärmetauschers 25 über die Leitung 8 noch einen Luftüberschuß für die Verbrennung des über die Leitung 7 der Wärmetauscherkammer I zugeführten weiteren Synthesegases mit sich führt.

Mit der beschriebenen, der Krafterzeugung dienenden Anlage läßt sich ein Wirkungsgrad (Klemmleistung) bezogen auf den Einsatz von ca. 42-45 % erreichen.

Die Vorteile im Vergleich mit herkömmlichen kohlegefeuerten Anlagen mit Rauchgasentschwefelung lassen sich be diesem Kombikraftwerk wie folgt zusammenfassen :

a) besserer Wirkungsgrad
b) niedrigere Stromerzeugerkosten
c) wesentlich niedrigerer Wasserbedarf
d) niedrigere Wärmeverluste
e) Möglichkeit, die Anlage in der Nähe umweltgeschützter Bezirke anzuordnen.

Wenn die Vergasung im Reaktor B bei Temperaturen zwischen 700 und 800 °C und bei Drücken von ca. 40 bar durchgeführt wird, kann man pro t Kohle ca. 3 200 m³ Produktgas von etwa folgender Zusammensetzung (Vol.-%) erhalten : 58 $H_2$, 2 CO, 30 $CO_2$, 10 $CH_4$. Durch eine $CO_2$-Wäsche kann der $CO_2$-Anteil eliminiert und die Anteile von $H_2$ und $CH_4$ auf 83 bzw. 14 Vol.-% erhöht werden, wodurch auf eine Konvertierung verzichtet werden kann, die bei durch autotherme Vergasung gewonnenem Gas in der Regel erforderlich ist. Die Tatsache, daß für die Vergasung kein Sauerstoff benötigt wird, ist ein weiterer wesentlicher Vorteil gegenüber autothermen Verfahren. Für die Verbrennung in den Brennkammern werden ca. 1/3 der Gasmenge benötigt, so daß ca. 2 000 m³ Gas pro t Kohle zur Verbrennung im Wärmetauscherraum I oder für andere Zwecke zur Verfügung stehen.

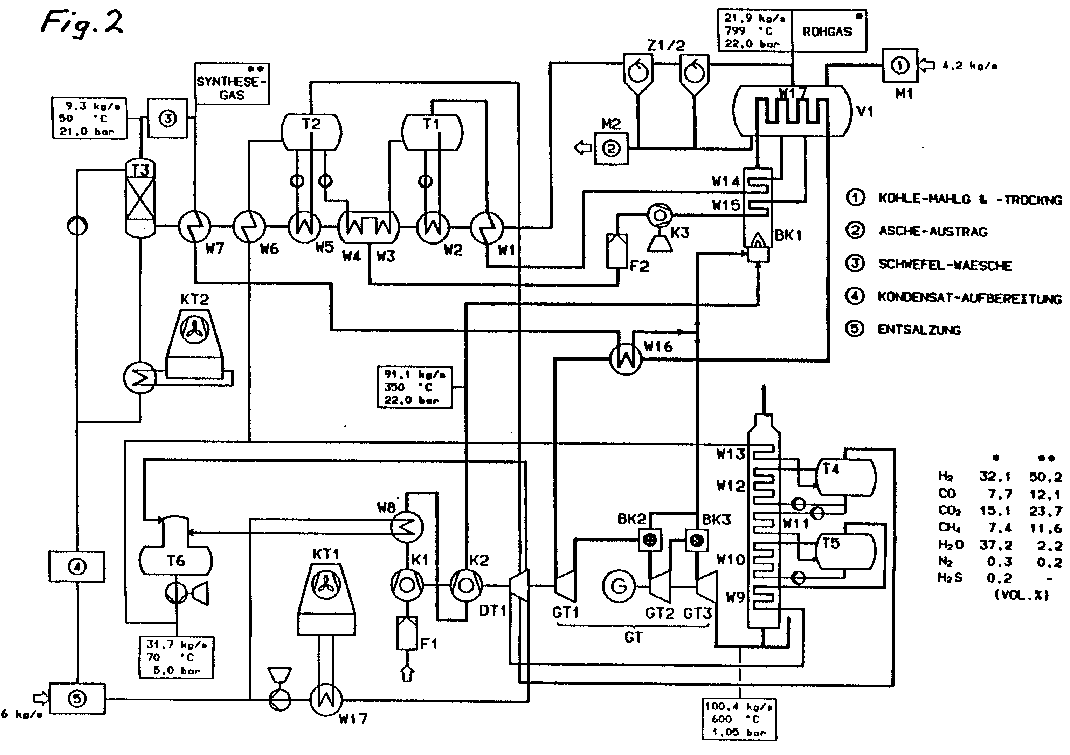

Bei dem in Fig. 2 dargestellten, in Details abgeänderten Ausführungsbeispiel läuft das Verfahren wie folgt ab :

Nach einer Mahltrocknung (M1) wird die aufbereitete Kohle in den Vergaser (V1) eingeblasen, wo sie mit Hilfe von Wasserdampf in einer Wirbelschicht bis zu 97 % vergast wird. Der Wasserdampf tritt mit 850 °C in den Vergaser ein, nachdem er den Wärmetauscher W14 in der Brennkammer BK1 durchlaufen hat. Die für die Vergasung notwendige Wärme wird dem Reaktionsraum über den Wärmetauscher W17 zugeführt. Die Asche sowie der Restkohlenstoff (nicht vergaste Kohle) werden über eine Zellradschleuse sowie ein Schleusensystem (M2) ausgetragen.

Das Rohgas, das den Vergaser V1 über den Doppelzyklon (Z1/Z2) verläßt, wird beim Durchlaufen der Rohgaskühlstrecke W1...W7 sowie im Quench T3 abgekühlt, wobei der im Rohgas enthaltene Wasserdampf auskondensiert und somit die Verdampfungswäre genutzt wird. Das Kondensat wird einer Wasseraufbereitungsanlage zugeführt und gelangt über die Kesselspeisewasseraufbereitung wieder in den Prozeß zurück. Der Prozeßwasserverbrauch reduziert sich dadurch auf ein Minimum. Die Kühlstrecke W1...W6 wird zur Erzeugung von MD-Dampf (T1) (25 bar) bzw. ND-Dampf (T2) (3,6 bar) verwendet. Das abgekühlte Rohgas wird einer Schwefelwäsche zugeführt. Diese Wäsche arbeitet nach einem oxydativen Verfahren. Das im Rohgas enthaltene $H_2S$ wird wird mit Luft direkt zu S umgesetzt (LO-CAT-Verf.). Der Schwefel kann in fester Form abtransportiert werden.

Über die Wärmetauscher W7 und W16 gelangt ein Teil des nunmehr gereinigten Rohgases (Synthesegas) in den Brenner der Brennkammer BK1. In dieser Brennkammer wird das Synthesegas mit vom Kompressor K 1/2 kommender Luft verbrannt, um, nachdem in den Wärmetauscher W15 bzw. W16 rezirkuliertes Rohgas (F2/FK3) bzw. Dampf aus (T1) auf 850 °C erhitzt wurde, mit 950 °C in den Wärmetauscher W17 des Vergasers V1 einzutreten.

Das Luft/Rauchgasgemisch verläßt W17/V1 mit 800 °C. Nach Durchlaufen des Wärmetauschers W16 tritt es mit 760 °C in die erste Stufe GT1 der Entspannungsturbine GT. In GT1 erfolgt die Entspannung von 20 bar auf 7,5 bar. Das Abgas aus GT1 gelangt in die der zweiten Stufe vorgeschaltete Brennkammer BK2, die mit einem weiteren Teil des Synthesegases beheizt wird, und wird dort wiederum erhitzt (Zwischenüberhitzung). In der Turbine GT2 erfolgt die Entspannung auf 3 bar. In der Brennkammer BK3 wird der Rest des Synthesegases mit dem Restsauerstoff des Rauchgases aus GT2 verbrannt (2. Zwischenüberhitzung). In der Turbine GT3 wird auf 1,05 bar entspannt.

Das mit rd. 600 °C die Entspannungsstufe GT3 verlassende Rauchgas tritt in den Rauchgaskühler WR mit den Wärmetauschern W9...W13 ein. In T5/W10 wird HD-Dampf (45 bar) erzeugt, der in W9 auf 480 °C überhitzt wird. In T4/W12 wird ND-Dampf erzeugt (3,6 bar). Das Rauchgas verläßt WR hinter dem Exonomizer W13 mit 105 °C.

Sowohl der HD-Dampf als auch der ND-Dampf aus T2 bzw. T4 werden auf die Dampfturbine DT1 gegeben. Sowohl diese Dampfturbine als auch die GT1 treiben den Kompressor K 1/2 an. Die beiden Gasturbinenstufen GT2 und GT3 sind mit dem Generator G gekoppelt. Das Kondensat aus der Dampfturbine DT1 wird über den Kühlturm KT1 abgekühlt und wieder in den Kreis zurückgepumpt.

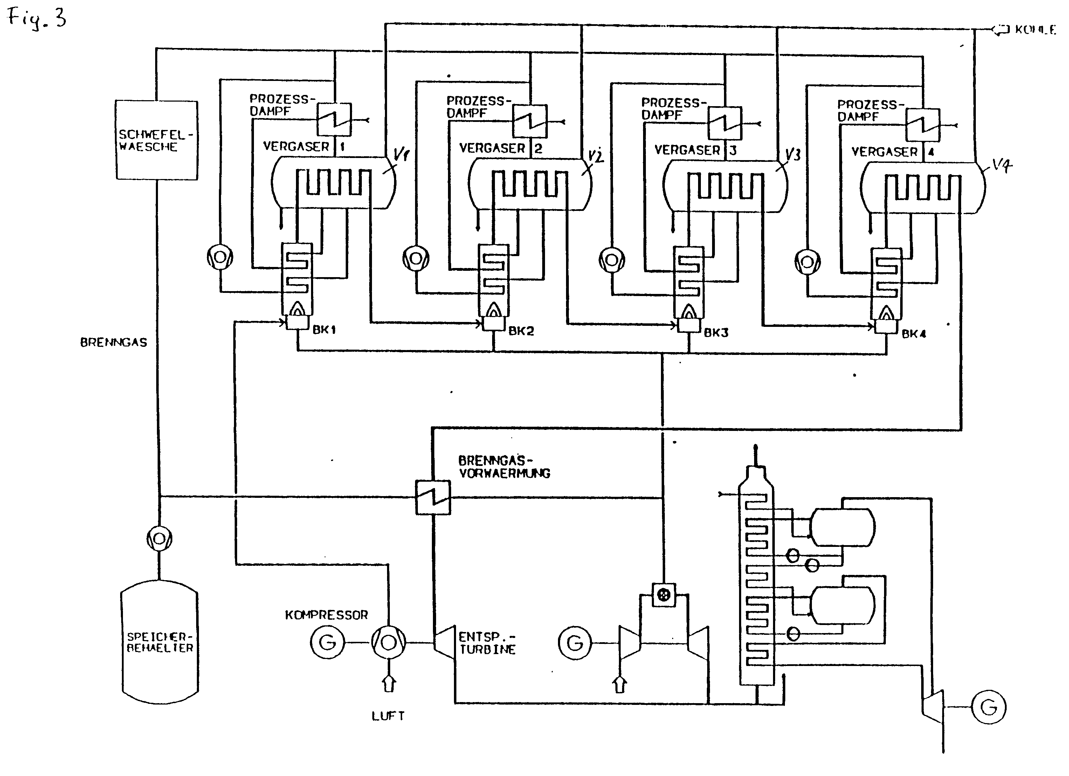

Aus baulichen und betrieblichen Gründen dürfte bei den Ausführungsbeispielen nach Fig. 1 und 2 die Größe und damit die Kapazität des Vergasungsreaktors B bzw. V1 begrenzt sein, wodurch auch die erzeugte Energiemenge bzw. Kraftwerksleistung begrenzt ist. Das Verfahren läßt sich aber ohne weiteres durch Einsatz mehrerer Vergaser auf eine größere Kapazität erweitern. Ein Ausführungsbeispiel hierfür zeigt Fig. 3.

Das den ersten Gaserzeuger V1 verlassende Luft/Rauchgasgemisch tritt mit 800 °V in die Brennkammer BK2 des zweiten Gaserzeugers V2 ein. In dieser wird das Luft-Rauchgasgemisch erneut durch Verbrennen eines Teils des Synthesegases erhitzt, Rauchgas sowie Dampf auf 800 °C erwärmt und das noch stark sauerstoffhaltige Rauchgas dem Wärmetauscher des zweiten Vergasers mit 950 °C zugeführt. Dieser Vorgang kann unter Zugrundelegen der Auslegungsdaten aus Bild 1 bei weiteren Vergasern V3 und V4 wiederholt werden, also insgesamt z. B. viermal angewendet werden. Die vier Vergaser sind somit bezüglich der Brennstoffzufuhr und des Synthesegasabzuges parallel, bezüglich der Rauchgaszufuhr zu den Wärmetauschern aber in Serie geschaltet.

Das den letzten Wärmetauscher verlassende Rauchgas ($O_2$-Gehalt = 6 %) wird einer Entspannungsturbine zugeführt. Diese Entspannungsturbine treibt den Luftkompressor an. Die Überschußenergie von 12 MW kann nach außen (auf das Netz) abgegeben werden. Das noch rd. 350 °C heiße Rauchgas dient zur Dampferzeugung.

Das erzeugte Synthesegas wird der Brennkammer einer Gasturbinenanlage (nach Entschwefelung) zugeführt. Die Stromerzeugung mittels dieser Kombianlage ist ähnlich Fig. 2.

Wird die Anlage nach Fig. 1, 2 oder 3 mit verminderter Leistung gefahren, so kann überschüssiges Synthesegas produziert werden, welches über einen weiteren Kompressor auf z. B. 200 bar zu einem Speicher (nicht dargestellt) gedrückt wird. Soll die Stromproduktion plötzlich angehoben werden, wird das Synthesegas aus dem Speicher in die Brennkammer der Gasturbine entspannt. Die Gasturbine kann dadurch sehr schnell hochgefahren werden. Die Speicherkapazität muß so groß sein, daß die Vergaser in dieser Zeit ebenfalls wieder auf volle Leistung gebracht werden können.

Die Erfindung ist nicht auf die beschriebenen, nur der Stromerzeugung dienenden Ausführungsbeispiele beschränkt. Das durch die Kohlevergasung erzeugte Synthesegas kann auch, soweit es nicht zur Aufheizung des Reaktors und zur Stromerzeugung verbrannt wird, als Prozeßgas für nachgeschaltete Prozesse verwendet werden.

Als Beispiele für eine anderweitige Nutzung des nicht verbrannten Überschusses an Synthesegas können genannt werden:

Die Verwendung als Stadtgas:

Das im Reaktor B erzeugte Produktgas entspricht in seinem Heizwert nach Auswaschung des $CO_2$ bereits den Anforderungen für Stadtgas. Eine Konvertierung und Methanisierung ist nicht erforderlich.

Eisenschwammerzeugung:

Das Produktgas läßt sich nach Auswaschen von $CO_2$ in einen Reduktionsgaskreislauf eines Reduktionsreaktors für Eisenschwamm einspeisen. Eine weitere Kopplung mit dem in der Zeichnung dargestellten Verfahrensschema ist dadurch möglich, daß der Reduktionsgaskreislauf eine im Wärmetauscherraum I angeordnete wärmetauscherschlange durchströmt und dadurch von den den Reaktor B verlassenden bzw. im Wärmetauscherraum I erzeugten Rauchgasen im indirekten Wärmeaustausch aufgeheizt wird.

Stahlerzeugung:

Auch in diesem Fall wird der Überschuß des Produktgases einem Reduktionsreaktor zugeführt, den es nur einmal durchströmt. Das im Reduktionsreaktor anfallende Gichtgas kann dem Wärmetauscherraum I zugeführt und dort verbrannt werden, so daß zusätzliches heißes Rauchgas für die Beaufschlagung der Entspannungsturbinen $J_1$, $J_2$ anfällt. Mit dem in den Generatoren S und T erzeugten Strom läßt sich der Eisenschwamm zusammen mit Schrott in einem Elektro-Lichtbogenofen einschmelzen. Man erhält ein Ministahlwerk, welches für Regionen mit qualitativ schlechtem Schrott und schlechter elektrischer Energieversorgung geeignet und besonders umweltfreundlich ist.

Weiterhin eignet sich das im Reaktor B erhaltene Produktgas besonders gut dazu, zur SNG-Erzeugung methanisiert oder auch direkt in Methanol umgewandelt werden.

## Patentansprüche

1. Verfahren zur Stromerzeugung aus kohlenstoffhaltigem Brennstoff, insbesondere Kohle, wobei der Brennstoff in einem indirekt beheizten Reaktor (B) unter Dampfzufuhr vergast, das Produktgas gereinigt, ein erster Teil des gereinigten Produktgases verbrannt und das so erzeugte Rauchgas als Wärmetauschmedium zur indirekten Heizung des Reaktors verwendet und nach dem Verlassen des Reaktors auf eine Gasturbine (J1) geleitet wird, dadurch gekennzeichnet, daß auf die Gasturbine (J1) außerdem Rauchgas geleitet wird, das durch Verbrennen eines weiteren Teils des Produktgases erzeugt und nicht zur indirekten Heizung des Reaktors verwendet wird, und daß mit der Gasturbine (J1) ein elektrischer Generator angetrieben wird.

2. Verfahren nach Anspruch 1, dadurch gekennzeichnet, daß der weitere Teil des Produktgases in einer Überhitzer-Brennkammer (I) verbrannt wird, die von dem von Reaktor (B) kommenden Rauchgas durchströmt wird.

3. Verfahren nach Anspruch 1, dadurch gekennzeichnet, daß der erste Teil des Produktgases mit Luftüberschuß verbrannt wird.

4. Verfahren nach Anspruch 2 und 3, dadurch gekennzeichnet, daß der weitere Teil des Produktgases in der Überhitzer-Brennkammer (I) mittels des Luftüberschusses in dem vom Reaktor (B) kommenden Rauchgas verbrannt wird.

5. Verfahren nach Anspruch 1, dadurch gekennzeichnet, daß das als Wärmetauschmedium verwendete Rauchgas einem Wärmetauscher (25) des Reaktors (B) mit einer Temperatur von 850 bis 1 000 °C, vorzugsweise ca. 900 °C zugeführt wird und ihn mit einer Temperatur von 750-850 °C, vorzugsweise ca. 800 °C, verläßt.

6. Verfahren nach Anspruch 4, dadurch gekennzeichnet, daß das Rauchgas vor Eintritt in die Gasturbine durch Zuführen und Verbrennen von weiterem Synthesegas auf eine Temperatur von 900-1 000 °C erhitzt wird.

7. Verfahren nach Anspruch 4, dadurch gekennzeichnet, daß das die Gasturbine verlassende Rauchgas durch Wärmeaustausch mit dem der Gasturbine zuzuführenden, vom Reaktor kommenden Rauchgas und/oder dem durch Verbrennen des überschüssigen Synthesegases erzeugten Rauchgas erneut erhitzt und einer weiteren Gasturbinenstufe zugeführt wird.

8. Verfahren nach Anspruch 4, dadurch gekennzeichnet, daß die Wärme des die Gasturbine bzw. die letzte Gasturbinenstufe verlassenden Rauchgases zur Überhitzung des Dampfes und/oder zur Dampferzeugung und/oder zur Speisewasservorwärmung des Dampferzeugers genutzt wird.

9. Verfahren nach Anspruch 1, dadurch gekennzeichnet, daß die Verbrennung des ersten Teils und/oder des weiteren Teils des Produktgases mit komprimierter Luft erfolgt.

10. Verfahren nach Anspruch 9, dadurch gekennzeichnet, daß der Reaktor und das gesamte Produktgas- und Rauchgassystem unter Überdruck gehalten wird.

11. Verfahren nach Anspruch 1, dadurch gekennzeichnet, daß der dem Reaktor zugeführte Prozeßdampf durch Wärmeaustausch mit dem im Reaktor erzeugten Produktgas und/oder mit dem die Gasturbine (J1 oder J2) verlassenden Rauchgas und/oder mit durch Verbrennen einer weiteren Teilmenge des Produktgases erhaltenem Rauchgas erzeugt wird.

12. Verfahren nach Anspruch 1, dadurch gekennzeichnet, daß durch Verbrennen von Produktgas erzeugtes Rauchgas mit dem Dampf gemischt und zusammen mit diesem in den Reaktorraum eingeführt wird.

13. Verfahren nach Anspruch 4, dadurch gekennzeichnet, daß die Wärme des die Gasturbine bzw. die letzte Gasturbinenstufe verlassenden Rauchgases zur Überhitzung des Dampfes und/oder zur Dampferzeugung und/oder zur Speisewasservorwärmung des Dampferzeugers genutzt wird.

14. Verfahren nach Anspruch 1, dadurch gekennzeichnet, daß ein Teil des den Reaktor verlassenden Synthesegases vor seiner Verbrennung und vor seiner Abkühlung unter den Kondensationspunkt des Wasserdampfes abgezweigt und in den Reaktor zurückgeführt wird zur Nutzung des darin enthaltenen Wasserdampfes zur Reaktion mit dem Brennstoff.

15. Verfahren nach Anspruch 1 oder 4, dadurch gekennzeichnet, daß ein momentan nicht zur Nutzung benötigter Teil des Synthesegases in einem Druckspeicher gespeichert wird.

16. Verfahren nach Anspruch 1, dadurch gekennzeichnet, daß als Brennstoff fester und/oder flüssiger brennbarer Abfall wie Müll, Altöl, od. dgl., ggf. in Mischung mit Kohle verwendet wird.

17. Einrichtung zur Durchführung des Verfahrens nach Anspruch 1, mit einem Wirbelschichtreaktor (B) mit Wärmetauscher (25), einer Einrichtung (A) zur Zuführung gemahlener Kohle zum Wirbelschichtreaktor (B), Einrichtungen (CF) zum Reinigen, insbesondere Entstauben und Entschwefeln des den Wirbelschichtreaktor verlassenden Produktgases, einem Dampferzeuger (D, N) für dem Wirbelschichtreaktor (B) zuzuführenden Dampf und einer mit gereinigtem Produktgas und komprimierter Luft überheizten Brennkammer (G) zur Erzeugung von Rauchgas als Wärmetauschmedium für den Wirbelschichtreaktor (B), dadurch gekennzeichnet, daß die Rauchgas-Austrittsleitung (8) des Wärmetauscher (25) mit einer Gasturbine (J1) verbunden und daß in die zur Gasturbine (J1) führende Rauchgasleitung (8, 9) ein mit einer weiteren Menge von gereinigtem Produktgas betriebener Brenner (I) zur Erzeugen weiteren Rauchgases eingefügt ist.

18. Einrichtung nach Anspruch 17, dadurch gekennzeichnet, daß der Wärmetauscher des Reaktors (B) als im Reaktorraum angeordnete Rohrschlange (25) ausgebildet ist.

19. Einrichtung nach Anspruch 17, dadurch gekennzeichnet, daß in die zur Gasturbine (J) führende Rauchgasleitung (8, 9) bzw. den Brenner (I) ein Wärmetauscher (26) zum Nacherhitzen des Abgases der Gasturbine (J1) eingefügt und an eine weitere Gasturbinenstufe (J2) angeschlossen ist.

20. Einrichtung nach Anspruch 17, dadurch gekennzeichnet, daß sie zwei oder mehr Reaktoren (V1, V2, V3, V4) aufweist, die parallel zueinander mit Brennstoff beschickt und an den Produktgasabzug angeschlossen sind, und daß die Wärmetauscher der Reaktoren derart hintereinandergeschaltet sind, daß das aus dem Wärmetauscher des einen Reaktors abgezogene Rauchgas ggf. nach Erhitzung in einer weiteren Brennkammer (BK2, BK3, BK4) dem Wärmetauscher des nächsten Reaktors zugeführt wird.

## Claims

1. A process for the generation of current from a carbon-containing fuel, in particular coal, wherein the fuel is gasified in an indirectly heated reactor (B) supplied with steam, the product gas is cleaned, a first portion of the cleaned product gas is burnt and the resultant flue gas is used as a heat-exchange medium for indirect heating of the reactor and, after leaving the reactor, is conveyed to a gas turbine (J1), characterised in that flue gas is also conveyed to the gas turbine (J1), which is produced by burning a further portion of the product gas and is not used for indirect heating of the reactor, and in that the gas turbine (J1) drives an electric generator.

2. A process according to Claim 1, characterised in that the further portion of the product gas is burnt in a superheater combustion chamber (I) through which flows the flue gas coming from the reactor (B).

3. A process according to Claim 1, characterised in that the first portion of the product gas is burnt with excess air.

4. A process according to Claims 2 and 3, characterised in that the further portion of the product gas is burnt in the superheater combustion chamber (I) by means of the excess air in the flue gas coming from the reactor (B).

5. A process according to Claim 1, characterised in that the flue gas used as the heat-exchange medium is fed to a heat exchanger (25) of the reactor (B) at a temperature of from 850 to 1 000 °C, preferably about 900 °C, and leaves it at a temperature of from 750-850 °C, preferably about 800 °C.

6. A process according to Claim 4, characterised in that, before entering the gas turbine, the flue gas is heated to a temperature of from 900-1 000 °C by the supply and combustion of further synthesis gas.

7. A process according to Claim 4, characterised in that the flue gas leaving the gas turbine is reheated by the flue gas coming from the reactor and to be fed to the gas turbine and/or by the flue gas produced by combustion of the excess synthesis gas, and is fed to another gas turbine stage.

8. A process according to Claim 4, characterised in that the heat of the flue gas leaving the gas turbine or the last gas turbine stage is used for superheating the steam and/or for steam generation and/or for preheating the feed water of a steam generator.

9. A process according to Claim 1, characterised in that the combustion of the first portion and/or further portion of the product gas is carried out with compressed air.

10. A process according to Claim 9, characterised in that the reactor and the entire product gas and flue gas system is maintained at overpressure.

11. A process according to Claim 1, characterised in that the process steam fed to the reactor is produced by heat exchange with the product gas produced in the reactor and/or with the flue gas leaving the gas turbine (J1 or J2) and/or with the flue gas obtained by combustion of the further portion of the product gas.

12. A process according to Claim 1, characterised in that flue gas produced by combustion of product gas is mixed with the steam and together with the steam is fed into the reactor chamber.

13. A process according to Claim 4, characterised in that the heat of the flue gas leaving the gas turbine or the last gas turbine stage is used for superheating the steam and/or for steam generation and/or for preheating the feed water of a steam generator.

14. A process according to Claim 1, characterised in that, before its combustion and before it is cooled to below the condensation point of steam, a portion of the synthesis gas leaving the reactor is tapped off and is recirculated to the reactor so as to use the water vapour contained therein to react with the fuel.

15. A process according to Claim 1 or 4, characterised in that a portion of the synthesis gas, which temporarily does not need to be used, is stored in a pressure accumulator.

16. A process according to Claim 1, characterised in that solid and/or liquid combustible waste, such a refuse, waste oil and the like, optionally mixed with coal, is used as fuel.

17. An apparatus for carrying out the process according to Claim 1, having a fluidised bed reactor (B) with a heat exchanger (25), a means (A) for feeding crushed coal to the fluidised bed reactor (B), means (CF) for cleaning, in particular for removing dust and sulphur from the product gas leaving the fluidised bed reactor, a steam generator (D, N) for steam to be fed to the fluidised bed reactor (B), and a combustion chamber (G), superheated with cleaned product gas and compressed air, for producing flue gas as a heat-exchange medium for the fluidised bed reactor (B), characterised in that the flue gas outlet duct (8) of the heat exchanger (25) is connected to a gas turbine (J1), and in that a burner (I), which is operated by a further quantity of cleaned product gas and and which serves to produce further flue gas, is provided in the flue gas duct (8, 9) leading to the gas turbine (J1).

18. An apparatus according to Claim 17, characterised in that the heat exchanger of the reactor (B) is in the form of a coiled pipe (25) disposed in the reactor chamber.

19. An apparatus according to Claim 17, characterised in that a heat exchanger (26) for reheating the waste gas from the gas turbine (J1) is provided in the flue gas duct (8, 9) leading to the gas turbine (J1) or in the burner (I) and is connected to a further gas turbine stage (J2).

20. An apparatus according to Claim 17, characterised in that it has two or more reactors (V1, V2, V3, V4) which are supplied with fuel in parallel with one another and which are connected to the product gas outlet, and in that the heat exchangers of the reactors are connected in series in such a way that the flue gas removed from the heat exchanger of one reactor, optionally after being heated in a further combustion chamber (BK2, BK3, BK4), is fed to the heat exchanger of the next reactor.

**Revendications**

1. Procédé pour produire du courant à partir de combustible contenant du carbone, notamment de charbon, dans lequel on gazéifie le combustible dans un réacteur (B) à chauffage indirect en envoyant de la vapeur, on épure le gaz produit, on fait brûler une première partie du gaz produit épuré et on utilise les gaz de fumée ainsi produits comme fluide d'échange de chaleur pour le chauffage indirect du réacteur et on l'envoie, après qu'il ait quitté le réacteur, à une turbine à gaz (J1), caractérisé en ce qu'on envoie en outre à la turbine à gaz (J1) des gaz de fumée produits par combustion d'une autre partie du gaz produit et qui ne sont pas utilisés pour le chauffage indirect du réacteur, et en ce qu'un générateur électrique est entraîné par la turbine à gaz (J1).

2. Procédé selon la revendication 1, caractérisé en ce que l'autre partie du gaz produit est brûlée dans une chambre de combustion à surchauffage (I) parcourue par les gaz de fumée provenant du réacteur (B).

3. Procédé selon la revendication 1, caractérisé en ce qu'on brûle la première partie du gaz produit avec un excès d'air.

4. Procédé selon les revendications 2 et 3, caractérisé en ce qu'on brûle l'autre partie du gaz produit dans la chambre de combustion à surchauffage (I) au moyen de l'excès d'air dans les gaz de fumée provenant du réacteur (B).

5. Procédé selon la revendication 1, caractérisé en ce que les gaz de fumée utilisés en tant que fluide d'échange de chaleur sont envoyés à un échangeur de chaleur (25) du réacteur (B) à une température de 850 à 1 000 °C, de préférence de 900 °C environ, ces gaz quittant l'échangeur à une température de 750 à 850 °C environ, de préférence de 800 °C environ.

6. Procédé selon la revendication 4, caractérisé en ce qu'on chauffe les gaz de fumée à une température de 900 à 1 000 °C, avant l'entrée dans la turbine à gaz, par amenée et combustion de gaz de synthèse supplémentaire.

7. Procédé selon la revendication 4, caractérisé en ce qu'on réchauffe les gaz de fumée quittant la turbine à gaz par échange de chaleur avec les gaz de fumée provenant du réacteur et devant être envoyés à la turbine à gaz et/ou avec les gaz de fumée produits par combustion du gaz de synthèse en excès, et on envoie ces gaz à un autre étage de la turbine à gaz.

8. Procédé selon la revendication 4, caractérisé en ce qu'on utilise la chaleur des gaz de fumée quittant la turbine à gaz ou le dernier étage de la turbine à gaz pour la surchauffe de la vapeur et/ou pour la production de vapeur et/ou pour le réchauffage de l'eau d'alimentation du générateur de vapeur.

9. Procédé selon la revendication 1, caractérisé en ce que la combustion de la première partie et/ou de l'autre partie du gaz produit est effectuée avec de l'air comprimé.

10. Procédé selon la revendication 9, caractérisé en ce qu'on maintient en surpression le réacteur et l'ensemble du système de gaz produit et de gaz de fumée.

11. Procédé selon la revendication 1, caractérisé en ce qu'on produit la vapeur de traitement envoyée au réacteur par échange de chaleur avec le gaz produit obtenu dans le réacteur et/ou avec les gaz de fumée quittant la turbine à gaz (J1 ou J2) et/ou avec les gaz de fumée obtenus par combustion d'une quantité partielle supplémentaire du gaz produit.

12. Procédé selon la revendication 1, caractérisé en ce qu'on mélange avec de la vapeur les gaz de fumée obtenus par combustion du gaz produit et on les introduit conjointement avec cette vapeur dans la chambre du réacteur.

13. Procédé selon la revendication 4, caractérisé en ce qu'on utilise la chaleur des gaz de fumée quittant la turbine à gaz ou le dernier étage de la turbine à gaz pour la surchauffe de la vapeur et/ou pour la production de vapeur et/ou pour le réchauffage de l'eau d'alimentation du générateur de vapeur.

14. Procédé selon la revendication 1, caractérisé en ce qu'on dérive et on renvoie dans le réacteur une partie du gaz de synthèse quittant le réacteur avant sa combustion et avant son refroidissement au-dessous du point de condensation de la vapeur d'eau, pour utiliser la vapeur d'eau qu'il contient pour la réaction avec le combustible.

15. Procédé selon la revendication 1 ou 4, caractérisé en ce qu'on accumule dans un accumulateur sous pression une partie du gaz de synthèse qui, temporairement, n'est pas nécessaire pour l'utilisation.

16. Procédé selon la revendication 1, caractérisé en ce qu'on utilise en tant que combustible des déchets combustibles solides et/ou liquides tels que des ordures, de l'huile usagée ou similaires, le cas échéant mélangés avec du charbon.

17. Installation pour la mise en pratique du procédé selon la revendication 1, comportant un réacteur à couche fluidisée (B) muni d'un échangeur de chaleur (25), un dispositif (A) pour amener du charbon pulvérisé au réacteur à couche fluidisée (B), des dispositifs (CF) pour l'épuration, notamment, le dépoussiérage et la désulfuration du gaz produit quittant le réacteur à couche fluidisée, un générateur de vapeur (D, N) pour la vapeur à envoyer au réacteur à couche fluidisée (B) et une chambre de combustion (G) surchauffée par du gaz produit épuré et de l'air comprimé pour produire les gaz de fumée en tant que fluide d'échange de chaleur destiné au réacteur à couche fluidisée (B), caractérisée en ce que la conduite de sortie de gaz de fumées (8) de l'échangeur de chaleur (25) est reliée à une turbine à gaz (J1) et en ce qu'un brûleur (I) fonctionnant avec une quantité supplémentaire de gaz produit épuré est inséré dans la conduite de gaz de fumée (8, 9) allant à la turbine à gaz (J1), pour produire des gaz de fumée supplémentaires.

18. Installation selon la revendication 17, caractérisée en ce que l'échangeur de chaleur du réacteur (B) est constitué sous forme de serpentin tubulaire (25) disposé dans la chambre du réacteur.

19. Installation selon la revendication 17, caractérisée en ce que dans la conduite de gaz de fumée (8, 9) allant à la turbine à gaz (J1) ou dans le brûleur (I) est inséré un échangeur de chaleur (26) pour réchauffer les gaz d'échappement de la turbine à gaz (J1), cet échangeur étant raccordé à un autre étage de turbine à gaz (J2).

20. Installation selon la revendication 17, caractérisée en ce qu'elle comporte deux ou un plus grand nombre de réacteurs (V1, V2, V3, V4) alimentés en combustible en parallèle et raccordés à l'extraction de gaz produit, et en ce que les échangeurs de chaleur des réacteurs sont branchés l'un derrière l'autre de manière que les gaz de fumée extraits de l'un des réacteurs soient envoyés, le cas échéant après chauffage dans une autre chambre de combustion (BK2, BK3, BK4), à l'échangeur de chaleur du réacteur suivant.

Fig. 1

EP 0 202 428 B1

# Fig.2

| | • | •• |
|------|------|------|
| $H_2$ | 32.1 | 50.2 |
| CO | 7.7 | 12.1 |
| $CO_2$ | 15.1 | 23.7 |
| $CH_4$ | 7.4 | 11.6 |
| $H_2O$ | 37.2 | 2.2 |
| $N_2$ | 0.3 | 0.2 |
| $H_2S$ | 0.2 | - |
| | (VOL.%) | |

① KOHLE-MAHLG & -TROCKNG
② ASCHE-AUSTRAG
③ SCHWEFEL-WAESCHE
④ KONDENSAT-AUFBEREITUNG
⑤ ENTSALZUNG

EP 0 202 428 B1

2

Fig. 3

KOHLE

SCHWEFEL-WAESCHE

PROZESS-DAMPF

VERGASER 1 V1

VERGASER 2 V2

VERGASER 3 V3

VERGASER 4 V4

BK1 BK2 BK3 BK4

BRENNGAS

BRENNGAS-VORWAERMUNG

SPEICHER-BEHAELTER

KOMPRESSOR

ENTSP.-TURBINE

LUFT

EP 0 202 428 B1

3